(19)

Europäisches
Patentamt
European
Patent Office
Office européen
des brevets

(11) **EP 1 696 103 B1**

(12) **EUROPEAN PATENT SPECIFICATION**

(45) Date of publication and mention
of the grant of the patent:
**30.07.2008 Bulletin 2008/31**

(51) Int Cl.:
*F01D 11/22* (2006.01)      *F01D 21/04* (2006.01)
*G01B 7/14* (2006.01)

(21) Application number: **06005648.8**

(22) Date of filing: **02.05.2003**

(54) **Gas turbine engine with active tip clearance control**

Gasturbine mit aktiv geregeltem Schaufelspitzenspiel

Turbine à gaz avec régulation active du jeu des extrémités des aubes

(84) Designated Contracting States:
**CH FR GB LI**

(30) Priority: **14.05.2002 US 378112 P**
           **14.06.2002 US 173552**

(43) Date of publication of application:
**30.08.2006 Bulletin 2006/35**

(62) Document number(s) of the earlier application(s) in
accordance with Art. 76 EPC:
**03728025.2 / 1 509 683**

(73) Proprietors:
  • **HONDA GIKEN KOGYO KABUSHIKI KAISHA**
    **Minato-ku,**
    **Tokyo 107-8556 (JP)**
  • **STANFORD UNIVERSITY**
    **Palo Alto, CA 94306-1106 (US)**

(72) Inventors:
  • **Matsunaga, Minoru**
    **Wako-Shi**
    **Saitama (JP)**
  • **Prinz, Fritz,**
    **Stanford University**
    **Stanford**
    **California 94305 (US)**
  • **Kang, Sangkyun,**
    **Stanford University**
    **Stanford**
    **California 94305 (US)**

  • **Fabian, Tibor,**
    **Stanford University**
    **Stanford**
    **California 94305 (US)**
  • **Brasseur, Georg,**
    **University of Technology Graz**
    **8010 Graz (AT)**
  • **Tresser, Jordan,**
    **M-dot Aerospace**
    **Phoenix**
    **Arizona 85040 (US)**
  • **Holman, Frank,**
    **M-dot Aerospace**
    **Phoenix**
    **Arizona 85040 (US)**
  • **Tsuru, Hideaki,**
    **Honda Research Institute USA Inc**
    **Mountain View**
    **California 94041-1270 (US)**

(74) Representative: **Cheyne, John Robert Alexander**
    **M.**
    **HASELTINE LAKE**
    **Redcliff Quay**
    **120 Redcliff Street**
    **Bristol BS1 6HU (GB)**

(56) References cited:
    **FR-A- 2 608 751         US-A- 3 000 101**
    **US-A- 3 176 286         US-A- 3 190 125**
    **US-A- 4 063 167         US-A- 5 140 494**
    **US-A- 5 263 816         US-B1- 6 273 671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a micro gas turbine engine provided with an active tip clearance control.

BACKGROUND OF THE INVENTION

Environmental concerns and increased demands for efficient utilization of available energy resources have prompted the development of various forms of power units. A micro gas turbine engine is one of such power units. Gas turbine engines have been known as a relatively clean and efficient power unit, but their uses have been relatively limited so far because of their size limitations. However, recent development in manufacturing technology has enabled the size of a gas turbine engine to be extremely small.

For instance, by making a rotor shaft incorporated with a compressor wheel and a turbine wheel as an integral ceramic member, it is possible to reduce the length of the gas turbine engine to about 10 cm. When such a micro gas turbine is combined with an alternator or other forms of electric generator, it is possible to replace batteries which have been widely used as small power units but are known to be relatively inefficient, heavy and inconvenient.

Small gas turbine engines are attractive as they can deliver improved power densities with high frequency operation. A major drawback of micro gas turbines is their low efficiency as compared to their large scale counterparts. A key parameter in controlling the efficiency is the clearance between the compressor blades and shroud. It is therefore important to control the tip clearance of the compressor section. Because of manufacturing tolerances and complex modes of thermal expansion of various components, a fixed tip clearance does not allow each particular gas turbine to achieve a satisfactory performance at all times. Therefore, it is desirable to actually measure the tip clearance and utilize the measured tip clearance for the active control of the tip clearance by feedback.

US 5263816 discloses a turbo machine with an active tip clearance control wherein the sensors in the shroud adjacent the rotor blade tips monitor the clearance between the shroud and the tip.

US 6273671 describes a blade clearance control for turbo machinery also with sensors located within the shroud for monitoring clearance between the shroud and the blades of the impeller.

BRIEF SUMMARY OF THE INVENTION

In view of such problems of the prior art, a primary object of the present invention is to provide a micro (miniature) gas turbine engine with an improved tip clearance control.

A second obj ect of the present invention is to provide a micro gas turbine engine with an improved tip clearance control which can operate efficiently under all operating conditions.

A third object of the present invention is to provide a micro gas turbine engine with an improved tip clearance control which can accommodate manufacturing tolerances of component parts and complex modes of thermal expansion of various component parts.

A fourth object of the present invention is to provide a micro gas turbine engine with an improved tip clearance control which is simple in structure and economical to manufacture.

According to the present invention, there is provided gas turbine engine with an active tip clearance control, comprising:

a rotor shaft rotatably supported by a bearing;
a compressor wheel integrally joined with said rotor shaft and forming a radial compressor section in cooperation with a first surrounding shroud to compress intake air;
a combustion chamber for burning fuel with compressed air produced by said compressor section;
a turbine wheel coupled to said rotor shaft and defining a turbine section in cooperation with a second surrounding shroud, said turbine section including an inlet end communicating with an outlet of said combustion chamber and an outlet for expelling combustion gas therefrom;
a housing surrounding a part of said rotor shaft;
an actuator for selectively causing an axial displacement of said rotor shaft;
a sensor comprising a first electrode formed over a surface part of said rotor shaft, a second electrode formed over a housing part opposing said first electrode, a third electrode formed over a housing part opposing said first electrode and adj acent to said second electrode, and a common electrode interposed between said second and third electrodes, said first electrode overlapping only partially with said second and third electrodes so that said electrodes jointly form a differential capacitive assembly; and
a controller having a pair of differential terminals operatively coupled to said second and third electrodes and a common terminal operatively coupled to said common electrode to detect a capacitance between said first and second electrodes for determining the axial displacement of said rotor shaft relative to said housing;
wherein the controller is operatively coupled to the actuator for controlling a tip clearance between the compressor wheel and said first surrounding shroud by activating said actuator in accordance with said determination of the axial displacement of the rotor shaft relative to the housing.

BRIEF DESCRIPTION OF THE DRAWINGS

Now the present invention is described in the following with reference to the appended drawings, in which:

Figure 1 is a schematic sectional side view of a generator driven by a micro gas turbine engine;
Figure 2 is a fragmentary side view of the working end of the actuator;
Figure 3 is a simplified diagram schematically illustrating a capacitive sensor shown in a dashed area in Figure 1 according to the present invention;
Figure 4 is a typical time history of an ideal tip clearance;
Figure 5 is a flow chart of the control process performed by the controller of the present invention;
Figure 6 is another embodiment of the coupling between the working end of the actuator and the rotor shaft;
Figure 7 is yet another embodiment of the coupling between the working end of the actuator and the rotor shaft;
Figure 8 is a view illustrating an embodiment of a capacitive sensor which forms part of gas turbine engine according to the present invention;

DETAILED DESCRIPTION OF THE PREFERRED EMBODIMENTS

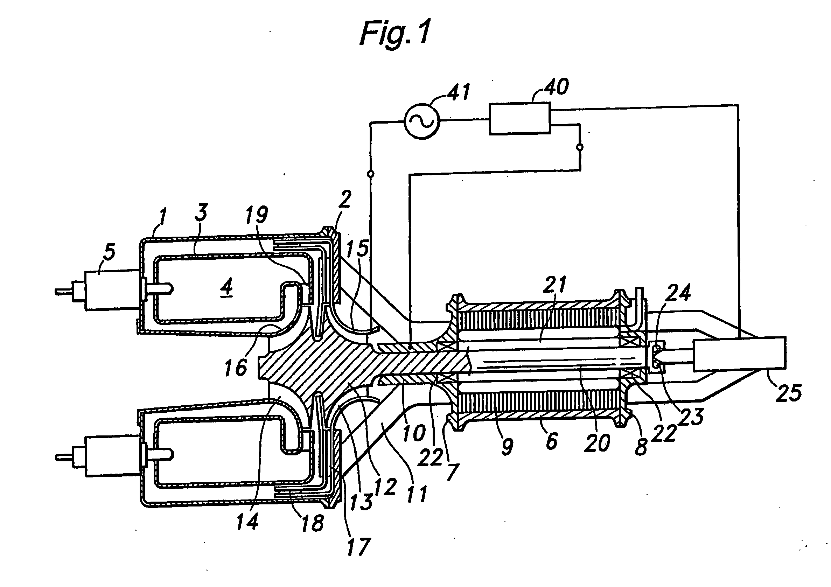

Figure 1 shows an illustrative example of an electric generator driven by a micro gas turbine engine which is useful for understanding the present invention. The micro gas turbine engine comprises an annular main housing 1 having an end remote from the generator closed, an end plate 2 attached to the open end of the main housing 1, a perforated annular inner housing 3 coaxially received inside the main housing 1 defining a combustion chamber 4 therein, a plurality of fuel injectors 5 each having a nozzle end projecting into the combustion chamber 4.

The generator comprises a cylindrical main housing 6 and a pair of end plates 7 and 8 respectively attached to either axial end of the main housing 6. The main housing 6 coaxially receives a stator coil 9 therein. The end plate 7 facing the gas turbine engine is provided with a tubular extension 10 extending centrally from the end plate 7 towards the gas turbine engine. The end plate 7 facing the gas turbine engine is joined to the opposite end plate 2 of the gas turbine engine by a plurality of stay members 11.

The gas turbine engine is additionally provided with an integral rotor shaft 12 carrying a compressor wheel 13 and a turbine wheel 14. The compressor wheel 13 and turbine wheel 14 are composed of a plurality of compressor blades and turbine blades, respectively. The integral rotor shaft 12 of this embodiment is made of ceramic material, and is integrally formed or otherwise integrated with the compressor wheel 13 and turbine wheel 14 as a single-piece ceramic rotor unit. Alternatively, the unit may consist of a plurality of individual component parts which are made of a same material or different materials. The material for the turbine blades should be ceramic or other heat resistant material which may be either electroconductive or electrically insulating. The choice of the material or materials depends on the particular configuration and specifications of the gas turbine engine. The axial length of this micro gas turbine engine is approximately 10 cm.

The compressor wheel 13 forms a radial compressor section in cooperation with a shroud 15 formed by a part of the end plate 2 of the gas turbine housing. The inlet end of the compressor section opens out in the axial direction opposite the generator. The outlet end of the compressor section communicates with a gap defined between the main housing 1 and the inner housing 3 via an array of stator vanes 18 and a diffuser 17.

The turbine wheel 14 forms a radial turbine section in cooperation with a turbine casing 16 formed by a part of the main housing 1. The inlet end of the turbine section communicates with an outlet end of the combustion chamber 4 via an inlet nozzle 19. The combustion chamber 4 in this embodiment extends from the inlet end of the turbine section away from the generator. The outlet end of the turbine section opens out in the axial direction facing away from the generator.

The integral rotor shaft 12 further comprises a generator shaft 20 which is an integral extension of the rotor shaft 12, and is passed centrally through the generator. Permanent magnet pieces 21 are mounted to or otherwise integrated in the generator shaft 20 to form the main functional part of the generator in cooperation with the stator coil 9. A roller bearing 22 is provided in each end plate to support the integral rotor shaft 12 at two points. The bearings 22 may also consist of air bearings that can favorably accommodate the axial displacement of the generator shaft 20 as described hereinafter. As can be readily appreciated, the types of the bearings and generator can be selected from any known ones without departing from the spirit of the present invention.

An axial end of the generator shaft 20 projecting out of the end plate 8 of the generator remote from the gas turbine engine is formed with a recess 23 receiving a plurality of steel balls 24, and a tapered end of an axial actuator 25 abuts the recessed axial end of the generator shaft 20 via the steel balls 24. The actuator 25 may be fixedly attached to the main housing 6 with a suitable stay member such as stay member 29. The actuator 25 consists of a piezo actuator in this embodiment, but may consist of an electromagnetic or other actuator as long as it is provided with a required response property.

A piezo actuator offers a number of benefits and advantages over other motion techniques. A piezo actuator can achieve a repeatable nanometer and sub-nanometer sized steps at high frequency because its motion is based on solid state crystal effects. A piezo actuator can be designed to move heavy loads (several tons) or can be made to move light loads at frequencies of several 10 kHz. A piezo actuator acts as a capacitive load and requires very little power in static operation, and this simplifies the power supply needs. A piezo actuator requires no maintenance because it is solid state, and its motion is based on molecular effects within ferroelectric crystals.

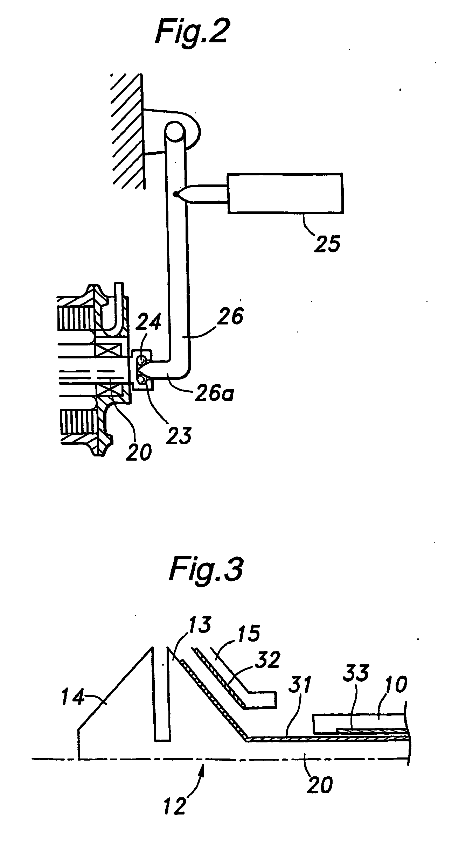

One of the disadvantages of a piezo actuator is its low strain in the order of 0.1%. This means that 100 mm long piezo actuator can expand by 100 micrometers when the maximum allowable field is applied. Simple distance transducers such as a lever can magnify the displacement but at the same time attenuate the transmitted force by the same ratio. A piezo actuator can develop forces much larger than the axial forces occurring at the rotor shaft of the gas turbine engine. Therefore, a distance transducer could be used to shorten the required length of the piezo actuator. Figure 2 schematically illustrates a lever member 26 interposed between the axial end of the generator shaft 20 and actuator 25. The base end of the lever member 26 is pivotally attached to a fixed point of the assembly and the free end 26a of the lever member 26 is provided with a tapered end which abuts a recess 23 formed at the axial end of the generator shaft 20 via steel balls 24.

Figure 3 schematically illustrates the principle of the tip clearance measurement employed in the example shown in Figure 1, which is based on the measurement of capacitance and/or its change with tip clearance. The shroud and other parts of the housings are made of electrically conductive metallic material, but the integral rotor shaft 12 is made of electrically non-conductive ceramic material. Also, it is extremely difficult to feed or draw electric current into or out of the integral rotor shaft 12 because it rotates at high speed in operation. Therefore, in this embodiment, at least the outer surface of the compressor wheel 13 and a part of the generator shaft 20 received in the tubular extension 10 of the generator end plate 7 are subjected to a suitable surface modification which makes the surface of the integral rotor shaft 12 electrically conductive for the purpose of forming capacitors in cooperation with the shroud 15 and tubular extension 10. More specifically, the surface of the blades 13a of the compressor wheel 13 is formed with a first electrode 31 which includes an extension covering a surface part of the generator shaft 20, and a second and third electrode 32 and 33 are formed on the opposing surfaces of the shroud 15 and the tubular extension 10, respectively. As can be readily appreciated, the shroud 15 and the tubular extension 10 should be electrically insulated from each other. If desired, the compressor wheel 13 may be made of electrically conductive material or a combination of metallic material and electrically insulating material as long as the necessary insulation is ensured or the compressor wheel 13 is allowed to be in the grounded state for the disclosed measurement techniques.

A serial connection of an AC voltage source 41 and a controller 40 including a measuring circuit is connected between the two electrodes 32 and 33 respectively formed on the shroud 15 and tubular extension 10. If the capacitance between the shroud electrode 32 and rotor electrode 31 is Cl and the capacitance between the rotor electrode 31 and tubular extension electrode 33 is C2, the combined capacitance as seen from the controller 40 is C1C2/ (C1+C2). C2 is relatively fixed during the operation of the gas turbine engine, and significantly larger than C1 because the area of the electrodes forming C2 is substantially larger than that forming C1. Therefore, the combined capacitance can be safely approximated by C1. Also, C1 is related to the clearance between the blades 13a of the compressor wheel 13 and associated shroud 15 in an approximately inversely proportional manner. This relationship between C1 and the tip clearance is somewhat nonlinear, and applicants have found that an accurate measure of the tip clearance can be determined therewith. In particular, the capacitance C1 gives a highly sensitive measure of the clearance as the clearance gets smaller and in parts where the clearance is small. Note Figure 3 is a simplified enlargement of the dashed area shown in Figure 1. Figure 3 is intentionally drawn with exaggerated (wider) gap for illustrative purposes only. As is apparent to one skilled in the art, drawings disclosed herein are not to scale and are not to be construed as limiting the present invention whatsoever.

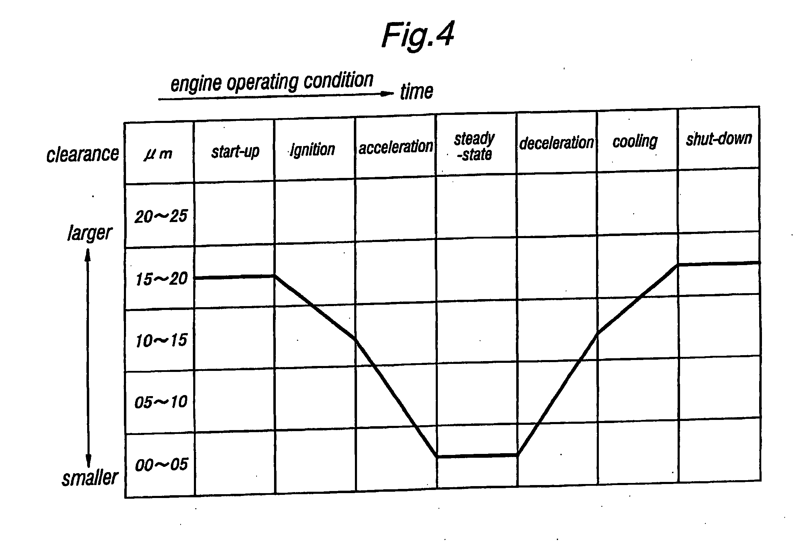

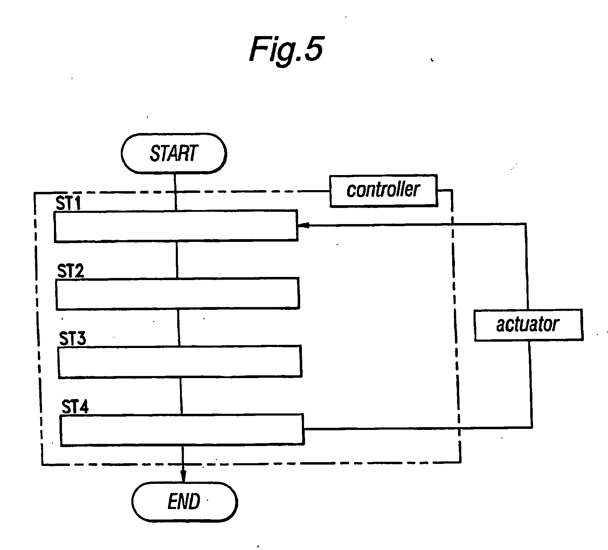

The mode of operation of this example is described in the following with reference to Figures 4 and 5. Figure 4 shows an ideal time history of the tip clearance from the start-up to shut-down of the gas turbine engine. Initially, the tip clearance is relatively large, but progressively diminishes to a minimum value by the time a steady-state operation is reached. When the gas turbine engine is about to be shut down, the tip clearance is gradually increased. Changes in the load and other external disturbances prevent the ideal tip clearance to be maintained.

Figure 5 shows the flow chart of the control process for this micro gas turbine engine. First of all, the rotational speed of the engine and a representative temperature of the engine are measured (step ST1). It is determined from the measured rotational speed and temperature what is the current mode of operation, such as such as the start-up, ignition, acceleration, steady-state, deceleration, cooling or shut-down (step ST2). By looking up a clearance table, the ideal tip clearance is determined (step ST3). The controller then provides an appropriate command to the actuator to change the current tip clearance to the ideal tip clearance (step ST4).

System efficiency may be further improved by using the electrical output as an additional means in control loop to determine the best tip clearance. This can be done by using a state-of-the-art control theory by measuring electrical output as a function of control in tip clearance.

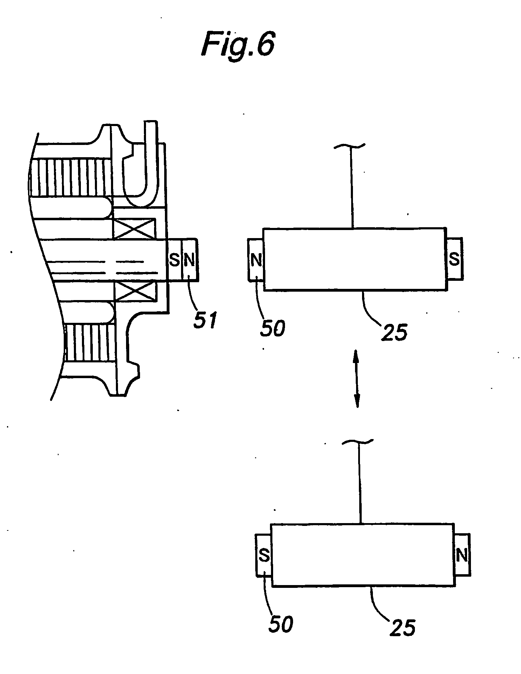

Figure 6 shows a magnetic coupling that can be placed between the working end of the actuator and the shaft end, instead of the rotational coupling shown in Figure 1. This magnetic coupling comprises a permanent magnet piece 51 attached to an axial end of the generator shaft 20 and an electromagnetic piece 50 provided in the working end of the actuator 25. By suitably controlling the magnetic polarity of the electromagnetic piece 50, and selectively producing a repulsive and attractive force between the actuator 25 and the generator shaft 20, a desired axial pressure can be applied to the rotor shaft without touching the generator shaft 20.

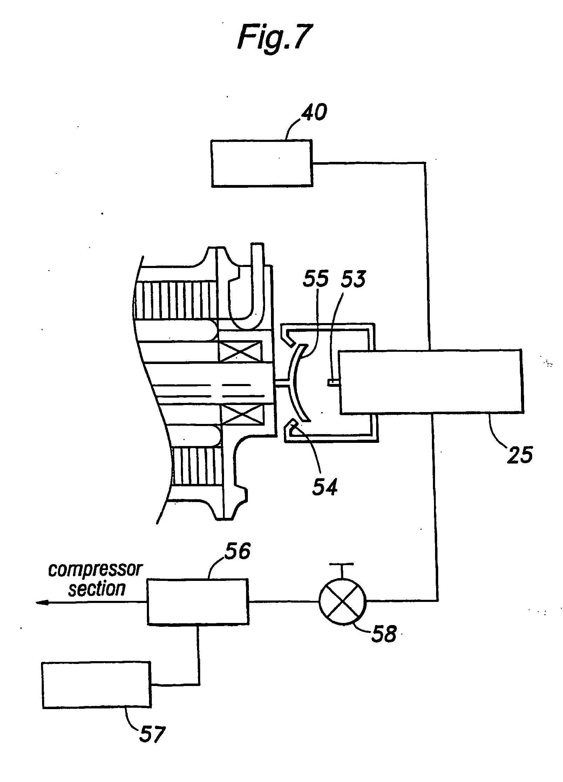

Figure 7 shows a flapper nozzle coupling that can be placed between the working end of the actuator and the shaft end, instead of the rotational coupling shown in Figure 1. The actuator 25 includes two sets of flapper nozzles 53 and 54 directed in opposite directions, and a flapper piece 55 extends from an end of the generator shaft 20 so that the air flows issuing from the two sets of flapper nozzles 53 and 54 may be impinged upon the flapper piece 55 in either axial direction. The air flows can be obtained by drawing a part of the compressed air from the outlet end of the compressor section. An accumulator 57 may be provided in association with the actuator to accumulate the compressed air during the operation of the engine, and supply the compressed air when the engine is not in operation. To this end, a switch valve 56 may be used in addition to a shut off valve 58.

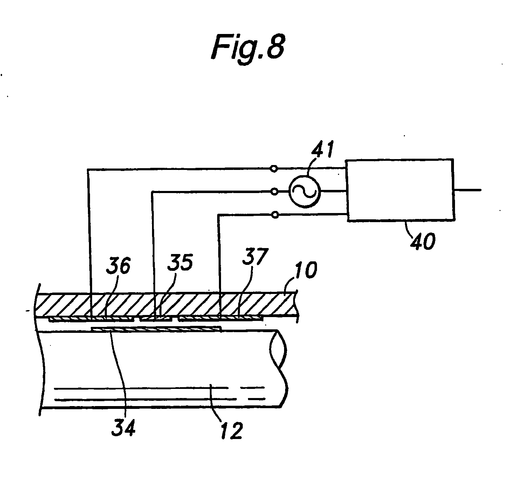

Figure 8 shows a capacitive sensor for tip clearance control which forms part of the gas turbine engine according to the invention. For the purposes of clarity, the same reference numerals have been retained to refer to like features. The remaining features of the gas turbine which are not illustrated in Figure 8, and the mode of operation, are the same as for the example shown in Figures 1 to 7. This embodiment allows the axial displacement of the rotor shaft 12 to be measured, instead of directly measuring the tip clearance. This requires a certain calibration to determine the relationship between the actual tip clearance and the sensor output.

In this embodiment, a first electrode 34 is formed on the outer circumferential surface of the integral rotor shaft 12 which is preferably made of ceramic material but may consist of a metallic member having an electrically insulated part at least on a surface part thereof. The opposing inner surface of the tubular extension 10 of the generator end plate 7 is provided with a common electrode 35 consisting of a relatively narrow strip formed over the inner circumferential surface of the tubular extension 10 at an axial position opposing an axially central part of the first electrode 34, and a second electrode 36 and a third electrode 37 which axially adjoin or otherwise respectively positioned substantially near the common electrode 35 on either side thereof and each respectively extends slightly beyond the corresponding far end of the first electrode 34. Preferably, these electrodes all extend over the entire circumference.

As is apparent to one skilled in the art, if the capacitance between one of the second and third electrodes 36 and the first electrode 34 is Ca and the capacitance between the other of the second and third electrodes 37 and the first electrode 34 is Cb, the relative axial displacement dx between the rotor shaft 12 and tubular extension 10 can be given by:

$$dx/L =(Ca-Cb)/ (Ca+Cb)$$

where L is the axial length of the first electrode 34.

To measure the capacitances Ca and Cb, the common electrode 35 is needed because a direct electrical connection to the first electrode 34 is not possible, and the rotor shaft 12 rotates at high speed. The common electrode 35 is required to be designed in such a way that the capacitance between the common electrode 35 and first electrode 34 will be independent from the relative axial displacement. The controller 40 in this case is provided with a common input which is connected to the common electrode 35 and a pair of differential inputs which are connected to the second and third electrodes 36 and 37, respectively.

According to this embodiment, because the capacitive sensor can be provided in a terminal end part of the compressor section or a part adjacent to the compressor section, as opposed to the main part of the compressor section, the overall arrangement can be formed as a highly compact unit. Also, the second and third electrodes 36 and 37 as well as the common electrode 35 are accessible from the other side of the tubular extension 10 so that the wiring for the capacitive sensor can be highly simplified.

Although the present invention has been described in terms of a preferred embodiment thereof, it is obvious to a person skilled in the art that various alterations and modifications are possible without departing from the scope of the present invention as set forth in the appended claim.

## Claims

1. A gas turbine engine with an active tip clearance control, comprising:

   a rotor shaft (12) rotatably supported by a bearing (22);
   a compressor wheel (13) integrally joined with said rotor shaft and forming a radial compressor section in cooperation with a first surrounding shroud to compress intake air;
   a combustion chamber (4) for burning fuel with compressed air produced by said compressor section;
   a turbine wheel (14) coupled to said rotor shaft (12) and defining a turbine section in cooperation with a second surrounding shroud (16), said turbine section including an inlet end communicating with an outlet of said combustion chamber and an outlet for expelling combustion gas therefrom;

a housing (10) surrounding a part of said rotor shaft (12);

an actuator (25) for selectively causing an axial displacement of said rotor shaft (12);

a sensor comprising a first electrode (34) formed over a surface part of said rotor shaft (12), a second electrode (36) formed over a housing part opposing said first electrode (34), a third electrode (37) formed over a housing part opposing said first electrode (34) and adjacent to said second electrode (36), and a common electrode (35) interposed between said second and third electrodes (36, 37), said first electrode (34) overlapping only partially with said second and third electrodes (36, 37) so that said electrodes jointly form a differential capacitive assembly; and

a controller (40) having a pair of differential terminals operatively coupled to said second and third electrodes (36, 37) and a common terminal operatively coupled to said common electrode (35) to detect a capacitance between said first and second electrodes (34, 36) for determining the axial displacement of said rotor shaft (12) relative to said housing (10);

wherein the controller (40) is operatively coupled to the actuator (25) for controlling a tip clearance between the compressor wheel (13) and said first surrounding shroud (15) by activating said actuator (25) in accordance with said determination of the axial displacement of the rotor shaft (12) relative to the housing (10).

**Patentansprüche**

1. Gasturbinenmotor mit aktiver Schaufelspaltregelung, umfassend:

eine Rotorwelle (12), die mit einem Lager (22) drehbar gelagert ist,

ein Kompressorrad (13), das mit der Rotorwelle einstückig verbunden ist und einen radialen Kompressorabschnitt bildet, der mit einem ersten umgebenden Deckband zusammenwirkt, so dass Ansaugluft komprimiert wird,

eine Brennkammer (4) zum Verbrennen von Kraftstoff mit komprimierter Luft, die von dem Kompressorabschnitt erzeugt wird,

ein Turbinenrad (14), das mit der Rotorwelle (12) gekoppelt ist und einen Turbinenabschnitt definiert, der mit einem zweiten umgebenden Deckband (16) zusammenwirkt, wobei der Turbinenabschnitt ein Einlassende enthält, das mit einem Auslass der Brennkammer und einem Auslass zum Ablassen von Verbrennungsluft daraus kommuniziert,

ein Gehäuse (10), das einen Teil der Rotorwelle (12) umgibt,

ein Stellglied (25), das selektiv eine axiale Verschiebung der Rotorwelle (12) bewirkt,

einen Sensor, umfassend eine erste Elektrode (34), hergestellt über einem Teil der Oberfläche der Rotorwelle (12), eine zweite Elektrode (36), hergestellt über einem Teil des Gehäuses gegenüber der ersten Elektrode (34), eine dritte Elektrode (37), hergestellt über einem Teil des Gehäuses gegenüber der ersten Elektrode (34) und neben der zweiten Elektrode (36), und eine gemeinsame Elektrode (35), die zwischen die erste und dritte Elektrode (36, 37) eingebracht ist, wobei die erste Elektrode (34) die zweite und dritte Elektrode (36, 37) nur teilweise überlappt, so dass die Elektroden zusammen eine Baugruppe mit differentieller Kapazität bilden, einen Regler (40) mit einem Paar differentieller Anschlüsse, die betriebsfähig mit den zweiten und dritten Elektroden (36, 37) verbunden sind, und mit einem gemeinsamen Anschluss, der betriebsfähig mit der gemeinsamen Elektrode (35) verbunden ist, so dass eine Kapazität zwischen der ersten und zweiten Elektrode (34, 36) ermittelt werden kann, zur Bestimmung der axialen Verschiebung der Rotorwelle (12) in Bezug auf das Gehäuse (10),

wobei der Regler (40) betriebsfähig mit dem Stellglied (25) verbunden ist, so dass er einen Schaufelspalt zwischen dem Kompressorrad (13) und dem ersten umgebenden Deckband (15) durch Aktivieren des Stellglieds (25) je nach der Ermittlung der axialen Verschiebung der Rotorwelle (12) in Bezug auf das Gehäuse (10) regelt.

**Revendications**

1. Turbine à gaz avec un contrôle d'écart à pointe active, comprenant :

un axe de rotor (12) soutenu en rotation par un support (22),

une roue de compresseur (13) reliée de manière solidaire avec le dit axe de rotor et formant une section radiale de compresseur en coopération avec un premier carénage d'enveloppement pour comprimer l'air entrant,

une chambre de combustion (4) pour brûler le carburant avec l'air comprimé produit par la dite section de compression,

une roue de turbine (14) couplée au dit axe de rotor (12) et définissant une section de turbine en coopération avec un deuxième carénage d'enveloppement (16), la dite section de turbine incluant une extrémité d'entrée communiquant avec une sortie de la dite chambre de combustion et une sortie pour en expulser les gaz de combustion,

un logement (10) entourant une partie du dit axe du rotor (12),

un activateur (25) pour assurer sélectivement un déplacement axial du dit axe du rotor (12),

un détecteur comprenant une première électrode (34) formée sur une partie de surface du dit axe du rotor (12), une deuxième électrode (36) formée sur une partie du logement faisant face à la dite première électrode (34), une troisième électrode (37) formée sur une partie du logement faisant face à la dite première électrode (34) et adjacente à la dite deuxième électrode (36), et une électrode commune (35) intercalée entre les dites deuxième et troisième électrodes (36, 37), la dite première électrode (34) recouvrant seulement partiellement les dites deuxième et troisième électrodes (36, 37) de telle façon que les dites électrodes forment conjointement un assemblage capacitif différentiel, et

un contrôleur (40) comportant une paire de terminaux différentiels couplés de manière fonctionnelle aux dites deuxième et troisième électrodes (36, 37) et un terminal commun couplé de manière fonctionnelle à la dite électrode commune (35) pour détecter une capacité entre les dites première et deuxième électrodes (34, 36) pour déterminer le déplacement axial du dit axe du rotor (12) par rapport au dit logement (10),

où le contrôleur (40) est couplé de manière fonctionnelle à l'activateur (25) pour contrôler un écart de pointe entre la roue de compresseur (13) et le dit premier carénage d'enveloppement (15) en activant le dit activateur (25) en accord avec la dite détermination du déplacement axial de l'axe du rotor (12) par rapport au logement (10).

## Fig.1

EP 1 696 103 B1

## Fig.2

## Fig.3

# Fig.4

engine operating condition → time

| clearance | μm | start-up | ignition | acceleration | steady -state | deceleration | cooling | shut-down |
|---|---|---|---|---|---|---|---|---|
| larger | 20∼25 | | | | | | | |
| | 15∼20 | | | | | | | |
| | 10∼15 | | | | | | | |
| | 05∼10 | | | | | | | |
| smaller | 00∼05 | | | | | | | |

EP 1 696 103 B1

# Fig.5

# Fig.6

# Fig.7

compressor
section

# Fig.8

**EP 1 696 103 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5263816 A
- US 6273671 B